# EUROPEAN PATENT SPECIFICATION

(11) **EP 0 307 493 B1**
(45) Date of publication and mention of the grant of the patent: **20.07.1994**
(21) Application number: 87113503.4
(22) Date of filing: 15.09.1987
(51) Int. Cl.: C11B 1/10, C11B 7/00, A23D 9/00, A23G 1/00

(54) **Hard butter**
Hartbutter
Beurre dur

(43) Date of publication of application: 22.03.1989
(73) Proprietor: ASAHI DENKA KOGYO KABUSHIKI KAISHA, Arakawa-ku Tokyo 116 (JP)
(72) Inventor: Itagaki, Kazuo c/o ASAHI DENKA KOGYO, Arakawa-ku Tokyo (JP); Yanagihara, Toshimichi c/o ASAHI DENKA KOGYO, Arakawa-ku Tokyo (JP); Maruzeni, Shouji c/o ASAHI DENKA KOGYO, Arakawa-ku Tokyo (JP); Yasuda, Nozomi c/o ASAHI DENKA KOGYO, Arakawa-ku Tokyo (JP)
(74) Representative: Grünecker, Kinkeldey, Stockmair & Schwanhäusser Anwaltssozietät

(56) References cited:
- GB-A- 1 511 617
- JOURNAL OF THE CHEMICAL SOCIETY, 1950, pages 1337-1342, Letchworth, GB; S.S. GUPTA et al.: "The configuration of naturally occurring mixed glycerides. Part VI. The component fatty acids and glycerides of stillingia tallows"
- CHEMICAL ABSTRACTS, vol. 99, 1983, page 146, abstract no. 56362f, Columbus, Ohio, US; R.P. ADAMS et al.: "Phytochemicals for liquid fuels and petrochemical substitutions: extraction procedures and screening results", & ECON. BOT. 1983, 37(2), 207-15

## Description

This invention relates to a hard butter which comprises a fat obtained from the pericarp of the Chinese tallow tree (Sapium Sebiferum).

An adult Chinese tallow tree, a deciduous shrub originating from China, attains a height of 5 to 10 m. The flowering time of this tree is from April to June and seeds thereof can be harvested from September to November. A seed of this tree is white, has a diameter of approximately 5 to 7 mm and contains a large amount of fats in its surface and kernel.

The fats obtained from the seeds of the Chinese tallow tree have been used merely in the preparation of candles and soaps hitherto. However there has been attempted to more effectively utilize the same as, for example, an ingredient of skin cosmetics (cf. Japanese Patent Laid-Open No. 183610/1983) or a substitute for petroleum.

Although the seed of this tree contains a large amount of fats in its surface and kernel, a fat obtained from the surface, i.e., pericarp oil, is completely different from that obtained from the kernel, i.e., kernel oil, in properties including physical ones.

For example, the kernel oil, which has an iodine value of 130 to 170 and is in the form of a liquid or a flowable matter at room temperature, falls within the category of a drying oil in a broad sense.

On the other hand, the pericarp oil has an iodine value of 25 to 45 and is in the form of a solid at room temperature. It comprises palmitic and oleic acids as major fatty acids. The major triglyceride thereof is 2-oleo-1,3-palmitine.

The 2-unsaturated-1,3-saturated glycerides mainly comprising 2-oleo-1,3-palmitine contained in the pericarp oil amounts to 50% by weight or more and sometimes to approximately 75% by weight of the pericarp oil.

The pericarp oil further contains 5 to 30% by weight of trisaturated glycerides mainly comprising 1,2,3-palmitine.

Journal of the Chemical Society, 1950: 1337-1342, S.S. Gupta et al describes the removal of a fraction containing substantially all the trisaturated glycerides from the component fatty acids and glycerides of pericarp oil of the Chinese tallow tree.

It is the object underlying the present invention to provide a hard butter that can be applied to chocolates having excellent snapping and meltability in the mouth.

This object is achieved with a hard butter comprising a fat which is obtained from the pericarp of the Chinese tallow tree (Sapium Sebiferum) by extraction followed by fractionation from which both high-melting and low-melting fractions have been removed through said fractionation and which has a solid fat content of 70% or more, 40% or more and 2% or less at 20°C, 30°C and 40°C, respectively. Preferably, the fat has a solid fat content of 80% or more, 60% or more and 0.5% or less at 20°C, 30°C and 40°C respectively. More particularly, the hard butter of the present invention comprises 5 to 95% of the fat as defined above and 95 to 5% by weight of one or more fats selected from sal fat, fractionated sal fat, fractionated shea fat, kokum fat, mango kernel fat, fractionated mango kernel fat and illipe fat.

Pericarp oil may be extracted from the seeds of the Chinese tallow tree either by heating unground seeds in an aqueous solvent or by using an organic solvent such as n-hexane.

The pericarp oil thus extracted may be degummed with the use of, for example, phosphoric acid optionally followed by deacidification, bleaching or similar purification treatment(s).

This pericarp oil contains at least 5 to 6% by weight, and sometimes as much as approximately 30% by weight, of trisaturated glycerides. If these trisaturated glycerides were present in a chocolate in a large amount, they would result in an excessively high viscosity during the tempering process to thereby make the appropriate tempering impossible. Further they would lower the meltability in the mouth of the final product. Therefore, according to the invention a high-melting fraction comprising said trisaturated glycerides from the pericarp oil is removed.

In addition, the content of 2-oleo-1,3-palmitine. which is the main ingredient of the aimed hard butter, varies from 50 to 75% by weight depending on the kind of the fat. Thus, according to the invention a low-melting fraction, which comprises, for example, triunsaturated glycerides and monosaturated-diunsaturated triglycerides is also removed from said pericarp oil to thereby effectively utilize the 2-oleo-1,3-palmitine.

In the present invention the effective procedure for removing said high-melting and low-melting fractions is fractionation. The fractionation may be effected either by using an organic solvent such as n-hexane or acetone or by, for example, wintering without using any organic solvent. Either method may be employed in the present invention.

The solvent fractionation may be superior in the yield and accuracy, although solventless fractionation such as wintering would also give a satisfactory result.

It is effective that the pericarp oil to be fractionated has a trisaturated glyceride content of 20% by weight or less, preferably 10% by weight or less, and a 2-unsaturated-1,3-saturated glyceride content of 50% by weight or more, preferably 60% by weight or more, although these requirements might not be always satisfied.

Namely, a pericarp oil having a solid fat content of 70% or more, 40% or more and 2% or less at 20°C. 30°C and 40°C, respectively, would impart preferable physical properties such as snapping and meltability in the mouth to a hard butter.

A hard butter comprising a pericarp oil having the abovementioned properties has an excellent snapping and a preferable meltability in the mouth. However a chocolate comprising a large amount of said hard butter has a somewhat low thermal resistance and similar anti-blooming properties, compared with those comprising cocoa butter. Although the thermal resistance and anti-blooming properties of a hard butter comprising a pericarp oil alone would offer no problem in practice, it is possible to give a hard butter highly compatible with cocoa butter by blending the pericarp oil with other fat(s). It is also possible to bring the thermal resistance of the hard butter to the same level as that of cocoa butter and to enhance the anti-blooming properties of the former to a level exceeding that of the latter thereby.

Although the pericarp oil to be used in the present invention per se is a preferable hard butter, a hard butter highly compatible with cocoa butter can be obtained by blending 5 to 95% by weight of said pericarp oil with 95 to 5% by weight of one or more fats selected from among, for example, sal fat, fractionated sal fat, fractionated shea fat, kokum fat, mango kernel fat, fractionated mango kernel oil and illipe fat.

It is usually appropriate that the content of said pericarp oil in the abovementioned blend is within a range of 50 to 80% by weight. When a particularly high thermal resistance is to be achieved, the content thereof may be adjusted to a level of 5 to 50% by weight. While, when a particularly excellent meltability in the mouth is to be achieved, the content thereof may be adjusted to a level of 80% by weight or more.

As described above, an extremely excellent hard butter which has the characteristics of pericarp oil as well as various improved properties can be obtained by blending the pericarp oil with one or more fats selected from among, for example, sal fat, fractionated sal fat, fractionated shea fat, kokum fat, mango kernel fat, fractionated mango kernel fat and illipe fat. That is to say, a hard butter comparable to cocoa butter in physical properties can be obtained by varying the content of the pericarp oil. Furthermore a hard butter having an elevated thermal resistance or an improved meltability in the mouth can be obtained thereby. Thus various hard butter products can be prepared by employing the pericarp oil, which increases the usefulness of the same.

Each hard butter of the present invention comprising said pericarp oil optionally blended with the abovementioned fat(s) is highly compatible with cocoa butter, shows excellent workabilities such as tempering properties when used in the preparation of a chocolate, and gives a final product having preferable properties including snapping, meltability in the mouth and thermal resistance.

It is the largest characteristic of the hard butter of the present invention comprising the above-mentioned pericarp oil originating from the Chinese tallow tree that said pericarp oil has a high solid fat content at 30°C. A middle-melting fraction obtained by fractionating palm oil, which is frequently used as a hard butter material, has a solid fat content of approximately 40% at 30°C. Compared thereto, the pericarp oil obtained from the Chinese tallow tree as used in the present invention is significantly superior in physical properties.

In addition, it is required to divide palm oil into three fractions in order to obtain the middle-melting fraction and yet the yield thus achieved is low, i.e., 40% or less. In contrast thereto, when the pericarp oil of the Chinese tallow tree is used as a starting material, a fractionated fat comparable to, or even exceeding, the middle-melting fraction of palm oil in qualities can be obtained in a higher yield by dividing the pericarp oil not only into two fractions but also into three fractions. Thus the cost for the production of hard butter can be significantly saved thereby.

To further illustrate the present invention, the following Example is given.

### Example

600 g of pericarp oil of the Chinese tallow tree (IV: 42.2), which had been deacidified and bleached, was dissolved in 1800 g of acetone at approximately 40°C and cooled to 20°C within 1.5 hour under stirring. After stirring the mixture at 20°C for 30 minutes, the crystals thus formed were filtered and washed with 600 g of acetone at 16°C. The acetone was distilled off from the filtrate thus obtained to give 510 g of a fraction, to which 2550 g of acetone was added. Then the mixture was heated to approximately 40°C and subsequently cooled to -2°C within 1.5 hour. After stirring the mixture at -2°C for 30 minutes, the crystals thus formed were filtered and washed with 900 g of acetone at -7°C. Thus 420 g of fractionated Chinese tallow (crystal part) having a solid fat content of 82.3%, 64.5% and 0% at 20°C, 30°C and 40° respectively, was obtained.

90% of the obtained fat was blended with 10% of kokum fat (IV: 36.0) to give a hard butter. With the use of this hard butter, a chocolate of the following composition was produced by way of trial. The obtained chocolate showed an excellent snapping and a preferable meltability in the mouth.

| Chocolate Composition : | Part by Weight : |
|---|---|
| sugar | 46 |
| cacao mass | 25 |
| whole fat milk powder | 13 |
| hard butter | 10 |
| cocoa butter | 6 |
| lecithin | 0.4 |
| vanillin | 0.03 |

## Claims

1. A hard butter comprising a fat which is obtained from the pericarp of the Chinese tallow tree (Sapium Sebiferum) by extraction followed by fractionation from which both high-melting and low-melting fractions have been removed through said fractionation and which has a solid fat content of 70% or more, 40% or more and 2% or less at 20°C, 30°C and 40°C, respectively.

2. The hard butter as set forth in claim 1, wherein said fat has a solid fat content of 80% or more, 60% or more and 0.5% or less at 20°C, 30°C and 40°C, respectively.

3. A hard butter comprising 5 to 95% by weight of a fat as defined in claim 1 and 95 to 5% by weight of one or more fats selected from sal fat, fractionated sal fat, fractionated shea fat, kokum fat, mango kernel fat, fractionated mango kernel fat and illipe fat.

## Patentansprüche

1. Hartbutter, umfassend ein Fett, welches aus dem Pericarp des chinesischen Talgbaums (Sapium sebiferum) durch Extraktion, gefolgt von Fraktionierung, erhalten wird, aus dem sowohl hochschmelzende als auch niedrigschmelzende Fraktionen durch die Fraktionierung entfernt worden sind und welches einen festen Fettgehalt von 70% oder mehr, 40% oder mehr und 2% oder weniger bei 20°C, 30°C bzw. 40°C hat.

2. Hartbutter nach Anspruch 1, worin das Fett einen festen Fettgehalt von 80% oder mehr, 60% oder mehr und 0,5% oder weniger bei 20°C, 30°C bzw. 40°C hat.

3. Hartbutter umfassend 5 bis 95 Gew.-% eines Fetts, wie es in Anspruch 1 definiert ist, und 95 bis 5 Gew.-% von einem oder mehreren Fetten, ausgewählt aus Salfett, fraktioniertem Salfett, fraktioniertem Sheafett, Kokumfett, Mangokernfett, fraktioniertem Mangokernfett und Illipefett.

## Revendications

1. Beurre dur comprenant une graisse qui est obtenue à partir du péricarpe de l'arbre à suif chinois (*Sapium sebiferum*) par extraction suivie d'un fractionnement, ledit fractionnement éliminant tant les fractions à point de fusion élevé que celles à point de fusion bas, et qui a une teneur en graisse solide de 70 % ou plus, de 40 % ou plus et de 2 % ou moins, à 20 °C, 30 °C et 40 °C, respectivement.

2. Beurre dur selon la revendication 1, dans lequel ladite graisse a une teneur en graisse solide de 80 % ou plus, de 60 % ou plus et de 0,5 % ou moins, à 20 °C, 30 °C et 40 °C, respectivement.

3. Beurre dur comprenant 5 à 95 % en poids d'une graisse selon la revendication 1, et 95 à 5 % en poids d'une ou plusieurs graisse(s) choisie(s) parmi la graisse de sal, la graisse de sal fractionnée, la graisse de karité fractionnée, la graisse de mangoustan, la graisse de noyau de mangue, la graisse de noyau de mangue fractionnée et la graisse d'illipé.
